# EUROPEAN PATENT APPLICATION

(11) **EP 3 185 101 A1**
(43) Date of publication of application: **28.06.2017**
(21) Application number: 16194429.3
(22) Date of filing: 18.10.2016
(51) Int. Cl.: G06F 1/18, G06F 1/26

(54) **PROCESSING FUNCTION EXPANSION CARD AND POWER EXPANSION BOARD THEREOF**

(30) Priority: 19.10.2015 TW 104134222
(60) Divisional application: 17172747.2
(71) Applicant: Giga-Byte Technology Co., Ltd., New Taipei City 231 (TW)
(72) Inventor: Huang, Shun-Chih, New Taipei City (TW); Chang, Chih-Lung, New Taipei City (TW); Cui, Bing-Qi, New Taipei City (TW)
(74) Representative: dompatent von Kreisler Selting Werner - Partnerschaft von Patent- und Rechtsanwälten mbB

(57) **Abstract**

A processing function expansion card has a substrate, a processing module, and a first connecting slot. The processing module is on a first surface of the substrate and has a set of first power connecting lines and a signal line. The first connecting slot is connected to the substrate and electrically connected to the first power connecting lines and the signal line. The first connecting slot is used for connecting to a first power expansion board in a pluggable manner.

## Description

### Technical Field

The present disclosure relates to a processing function expansion card and a power expansion board thereof, more particularly to a processing function expansion card being capable of externally connecting to a power expansion board and its corresponding expansion board.

### Background of the Invention

Processing function expansion cards such as graphics accelerators are widely applied to computers to raise calculation capabilities of computers in some applications so that good experiences are provided to users. With development of integrated circuits, processing function expansion cards can significantly raise capabilities of computers. For example, capabilities of floating point calculation, encoding and decoding for two-dimensional images or three-dimensional images. However, power consumptions of processing function expansion cards are increased when calculations are increased.

Moreover, when users would like to raise capabilities of computers with a way of overclocking, the users could decrease the time spent on each calculation of computers by adjusting clock frequencies of computers. However, it leads to a problem that power supplying modules of processing function expansion cards usually fail to supply power greater than predetermined power. Because of the innate limitation, calculation efficiencies of processing function expansion cards could not be significantly raised by computer users when overclockings are in progress.

### Summary of the Invention

Based on the aforementioned problem, the present disclosure provides a processing function expansion card having a characteristic of scalable power supplying as well as a power expansion board applied to this kind of processing function expansion card.

A processing function expansion card is disclosed in the present disclosure. The processing function expansion card has a substrate, a processing module and a first connecting slot. The processing module is on a first surface of the substrate and has a set of first power connecting lines and a signal line. The first connecting slot is connected to the substrate and electrically connected to the set of first power connecting lines and the signal line. The first connecting slot is used for connecting to a power expansion board in a pluggable manner.

A power expansion board is disclosed in the present disclosure. The power expansion board has a connector, a power connecting port and a plurality of split-phase units. The connector is used for connecting to a connecting slot in a pluggable manner. The power connecting port is used for connecting to a power supplying device in a pluggable manner to acquire power. Each split-phase unit has a signal input terminal, a power input terminal and at least one output terminal. The signal input terminal and the output terminal both are electrically connected to the connector. The power input terminal is electrically connected to the power connecting port. Each split-phase unit is configured to convert an input power from the power input terminal to two output power having different phases and supply the two output power to two output terminals according to a power command of the signal input terminal.

Based on the descriptions above, according to the processing function expansion card and the power expansion board thereof disclosed in the present disclosure, a modular expanding power modules and a processing function expansion card having a capability of expanding power module are provided so that users are able to provide power having different phases to the processing module according to actual demands.

### Brief Description of the Drawings

The present disclosure will become more fully understood from the detailed description given hereinbelow and the accompanying drawings which are given by way of illustration only and thus are not limitative of the present disclosure, wherein:
Fig. 1A is a side-view structure diagram of a processing function expansion card according to one embodiment of the present disclosure;
Fig. 1B is a block diagram corresponding to the processing function expansion card of Fig. 1A;
Fig. 2A is a side-view structure diagram of processing function expansion card according to another embodiment of the present disclosure;
Fig. 2B a block diagram corresponding to the processing function expansion card of Fig. 2A;
Fig. 2C is a block diagram of a processing function expansion card connected to the corresponding power expansion board according to one embodiment of the present disclosure;
Fig. 2D is a block diagram of a processing function expansion card connected to the corresponding power expansion board according to another embodiment of the present disclosure;
Fig. 3A is a side-view structure diagram of a processing function expansion card according to still another embodiment of the present disclosure;
Fig. 3B is a block diagram corresponding to the processing function expansion card of Fig. 3A;
Fig. 3C is a block diagram of a processing function expansion card connected to the corresponding power expansion board according to one embodiment of the present disclosure; and
Fig. 3D is a block diagram of a processing function expansion card connected to the corresponding to power expansion board according to another embodiment of the present disclosure.

### Detailed Description

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

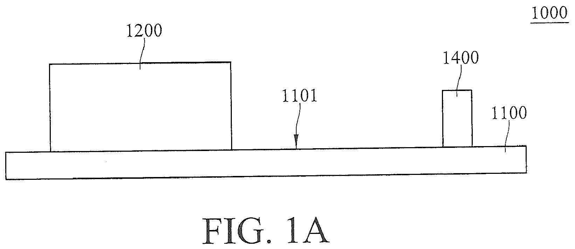

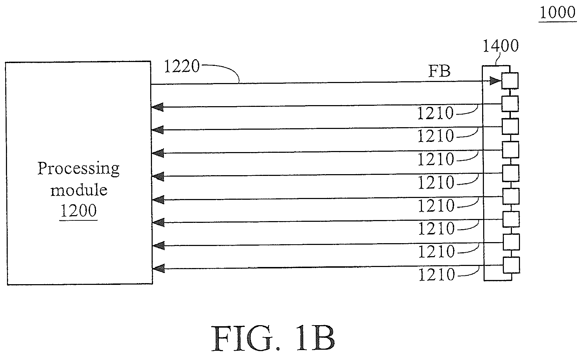

Please refer to Fig. 1A and Fig. 1B, wherein Fig. 1A is a side-view structure diagram of a processing function expansion card according to one embodiment of the present disclosure, and Fig. 1B is a block diagram corresponding to the processing function expansion card of Fig. 1A. In an embodiment of the present disclosure shown in Fig. 1A and Fig. 1B, the processing function expansion card 1000 has a substrate 1100, a processing module 1200 and a first connecting slot 1400. The processing module 1200 is on a first surface 1101 of the substrate 1100. The processing module has a set of first power connecting lines 1210 and a signal line 1220. Here the signal line 1220 could be a set of signal lines or a pair of signal lines. For example, inter-integrated circuit (I²C) has a pair of signal lines. The first connecting slot 1400 is connected to the substrate 1100 and electrically connected to the first power connecting lines 1210 and the signal line 1220. The first connecting slot 1400 is used for connecting to a power expansion board in a pluggable manner. In the present disclosure, the processing function expansion card could be, for example, a graphic accelerator, a floating point calculation expander or other expanders used for expanding and raising capabilities of computers.

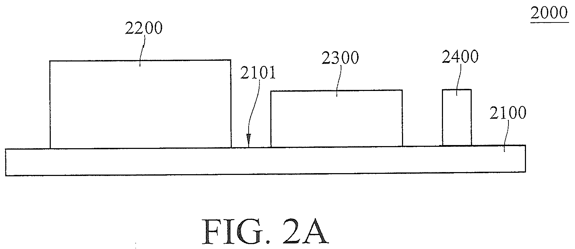

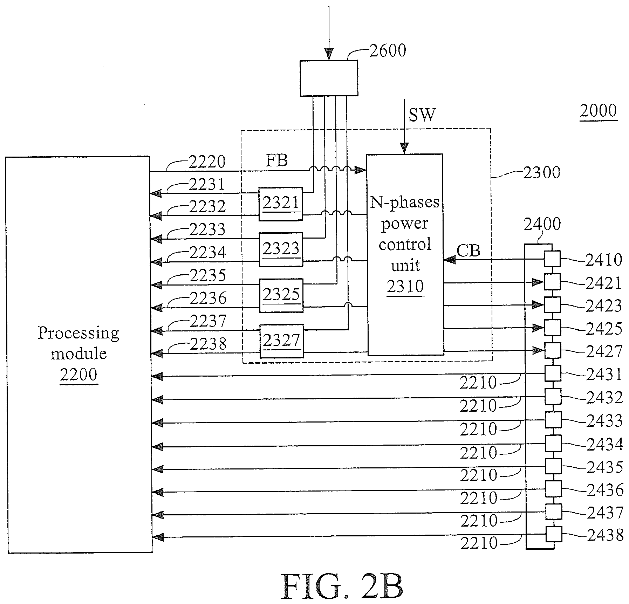

In another embodiment, please refer to Fig. 2A and Fig. 2B, wherein Fig. 2A is a side-view structure diagram of a processing function expansion card according to another embodiment of the present disclosure, and Fig. 2B is a block diagram corresponding to the processing function expansion card of Fig. 2A. As shown in Fig. 2A and Fig. 2B, in the embodiment, the processing function expansion card 2000 has a substrate 2100, a processing module 2200, an embedded power module 2300, a first connecting slot 2400 and a power connecting port 2600. The processing module 2200 is on a first surface 2101 of the substrate 2100. The processing module has a set of first power connecting lines 2210, a signal line 2220 and a set of second power connecting lines 2231-2238. The embedded power module 2300 is electrically connected to the second power connecting lines 2231-2238 and the signal line 2220. The first connecting slot 2400 is connected to the substrate 2100 and electrically connected to the first power connecting lines 2210. The first connecting slot 2400 is used for connecting to a power expansion board in a pluggable manner. The first connecting slot 2400 is electrically connected to the embedded power module 2300 and is electrically connected to the signal line 2220 through the embedded power module 2300.

More specifically, as shown in Fig. 2B, the embedded power module 2300 has an N-phases power control unit 2310 and M split-phase units 2321-2327. Here N=8 and M=4 are taken as an example. However, in practice, N is an integer greater than one and M is a positive integer less than or equal to N. Here the four split-phase units 2321-2327 are electrically connected to the 8-phases power control unit 2310 and the second power connecting lines 2231-2238. Specifically, the split-phase unit 2321 is electrically connected to the 8-phases power control unit 2310 and the second power connecting lines 2231, 2232. The split-phase unit 2323 is electrically connected to the 8-phases power control unit 2310 and the second power connecting lines 2233, 2234. The split-phase unit 2325 is electrically connected to the 8-phases power control unit 2310 and the second power connecting lines 2235, 2236. The split-phase unit 2327 is electrically connected to the 8-phases power control unit 2310 and the second power connecting lines 2237, 2238. All the split-phase units 2321-2327 are electrically connected to the power connecting port 2600. The power connecting port 2600 is used for connecting to a power supplying device in a pluggable manner to acquire power for supplying power to the processing function expansion card 2000. Here the power supplying device could be, for example, a power supplier of a computer or other devices capable of supplying constant DC power, and the present disclosure is not limited to the power supplying device in the above embodiment.

The 8-phases power control unit 2310 is configured to provide four first power commands P11-P14 and four second power commands P21-P24. Each first power command and each second power command control the split-phase units respectively to generate power having different phases to the processing module 2200. Specifically, the 8-phases power control unit 2310 and the split-phase units can be implemented by pulse width modulation (PWM).

The four split-phase units 2321-2327 are configured to acquire power from the power connecting port 2600 and supply eight second output power Po1-Po8 to the processing module 2200 according to the aforementioned four second power commands P21-P24. Specifically, the split-phase unit 2321 may supply the second output power Po1, Po2 to the second power connecting lines 2231, 2232 respectively according to the second power command P21. The split-phase unit 2323 may supply the second output power Po3, Po4 to the second power connecting lines 2233, 2234 respectively according to the second power command P22. The split-phase unit 2325 may supply the second output power Po5, Po6 to the second power connecting lines 2235, 2236 respectively according to the second power command P23. The split-phase unit 2327 may supply the second output power Po7, Po8 to the second power connecting lines 2237, 2238 respectively according to the second power command P24.

In one embodiment, the 8-phases power control unit 2310 is electrically connected to the signal line 2220 and configured to generate at least four second power commands P21-P24 according to a feedback signal FB sent from the signal line 2220. Specifically, the feedback signal FB may carry information regarding power demands of the processing module 2200. The 8-phases power control unit 2310 generates the second power commands P21-P24 according to the power demands of the processing module 2200 so that the second output power Po1-Po8 delivered finally meet the demands of the processing module 2200.

In another embodiment, the first connecting slot 2400 may have M first power cables 2421-2427 and 2M (i.e. 2*M) output power cables 2431-2438. In the circumstances, taking M=4 as an example. The first power cables 2421-2427 are electrically connected to the 8-phases power control unit 2310. The output power cables 2431-2438 are electrically connected to the aforementioned first power connecting line 2210. Specifically, there are eight power connecting lines in the first power connecting line 2210. The eight power connecting lines correspond to the output power cables 2431-2438 respectively. The 8-phases power control unit further supply four first power commands P11-P14 to four first power cables 2421-2427 according to a switching signal SW. In an embodiment, the switching signal SW is generated and changed through a trigger of a user with a way of physical switch or software settings. While in another embodiment, the switching signal SW is generated and changed by determining whether the first connecting slot 2400 is plugged with the power expansion board 2500.

Moreover, in an embodiment, the first connecting slot 2400 may further have a current command cable 2410. The 8-phases power control unit 2310 is electrically connected to the current command cable 2410 and generates four first power command P11-P14 and four second power commands P21-P24 according to a current balancing information CB from the current command cable 2410.

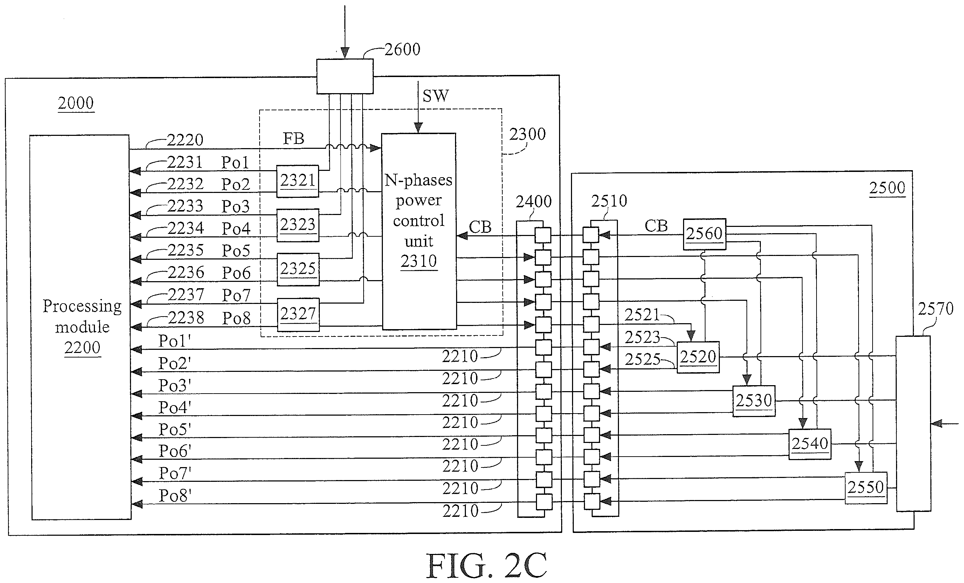

Therefore, when the first connecting slot 2400 is connected to a power expansion board, please refer to Fig. 2C which is a block diagram of a processing function expansion card connected to the corresponding power expansion board according to one embodiment of the present disclosure. In the embodiment shown in Fig. 2C, the power expansion board 2500 has a connector 2510 and a plurality of split-phase units 2520, 2530, 2540 and 2550 as well as a power connecting port 2570. In the embodiment, the number of split-phase units is 4. However, in practice, the number of split-phase unit is not limited to be 4. The connector 2510 is used for connecting to the aforementioned first connecting slot 2400 in a pluggable manner. The power connecting port 2570 is used for connecting to the power supplying device in a pluggable manner for acquiring power. Taking the split-phase unit 2520 as an example, each split-phase unit has a input terminal 2521 and two output terminals 2523 and 2525. Each split-phase unit is electrically connected to the power connecting port 2570 for acquiring power. In the embodiment, all the input terminal and the two output terminals of each split-phase unit are electrically connected to the connector 2510. Each split-phase unit converts power acquired from the power connecting port 2570 to two output power having different phases to the two output terminals according to a current command from the input terminal. In another embodiment, each split-phase unit may be not limited to having two output terminals. According to actual demands, each split-phase unit can have one output terminal or at least three output terminals.

Moreover, in one embodiment, the power expansion board 2500 may further have a control unit 2560. The control unit 2560 is electrically connected to the split-phase units 2520-2550 and electrically connected to the connector 2510. The control unit 2560 may generate the aforementioned current balancing information CB according to the aforementioned output power of split-phase units.

Therefore, when the power expansion board 2500 is plugged in the first connecting slot 2400, the 8-phases power control unit 2310 in the embedded power module2300 of the processing function expansion card 2000 may supply second power commands P21-P24 to split-phase units 2321-2327 in the embedded power module 2300 respectively according to the switching signal SW, and supply first power commands P11-P14 to the split-phase units 2520-2550 in the power expansion board 2500 through the first connecting slot 2400 respectively. The 8-phases power control unit 2310 may generate a first power command and a second power command according to the feedback signal FB and the current balancing information CB so as to meet the demands of the processing module 2200. The second output power Po1-Po8 output from the split-phase units 2321-2327 are directly supplied to the processing module 2200. The first output powers Po1'-Po8' output from the split-phase units 2520-2550 are supplied to the processing module 2200 through the output power cables 2431-2438 of the first connecting slot 2400 and the first power connecting lines 2210. In one embodiment, the switching signal SW is generated and changed through a trigger of a user with a way of physical switch or software settings. In another embodiment, the switching signal SW is generated and changed by determining whether the first connecting slot 2400 is plugged with the power expansion board 2500.

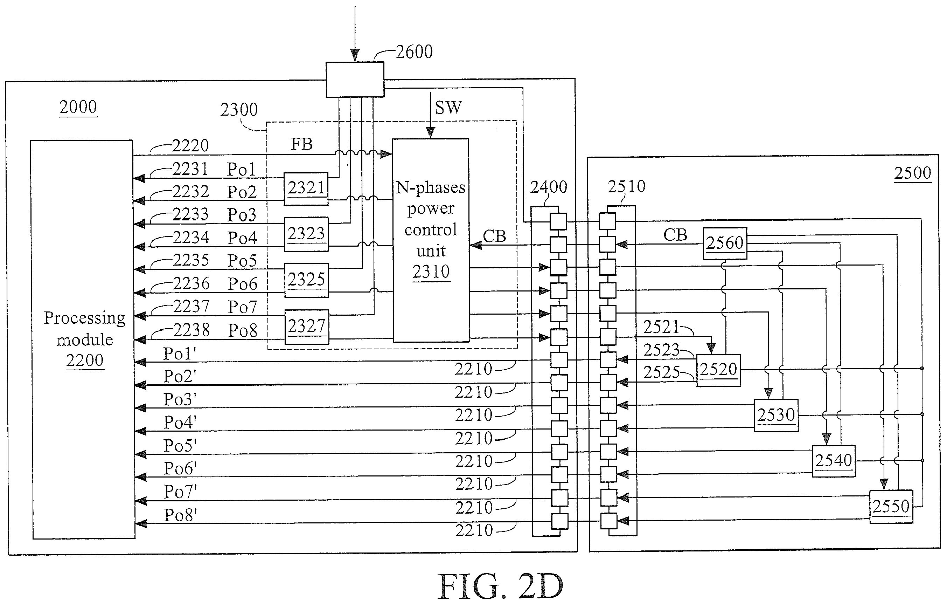

Moreover, please refer to Fig. 2D which is a block diagram of a processing function expansion card connected to the corresponding power expansion board according to another embodiment of the present disclosure. As shown in Fig. 2D, comparing to the embodiment in Fig. 2C, the power connecting port of the power expansion board 2500 could be one or more pins of the connector 2510 in this embodiment. The current command cable 2410 and the connector 2510 have a power cable respectively. The two power cables are electrically connected with each other. The power connecting port 2600 is further electrically connected to the power cable of the current command cable 2410. The power cable of the connector 2510 is electrically connected to the split-phase units 2520-2550. In this way, the power acquired by the power connecting port 2600 could also be supplied to the split-phase units 2520-2550 through the current command cable 2410 and the connector 2510.

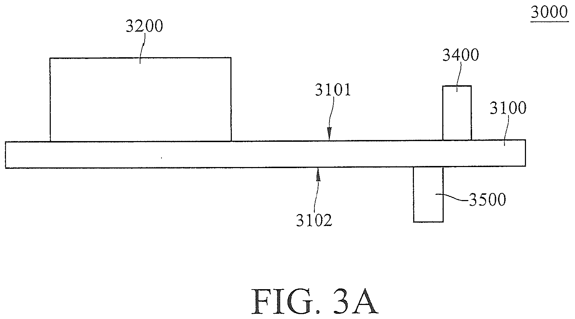

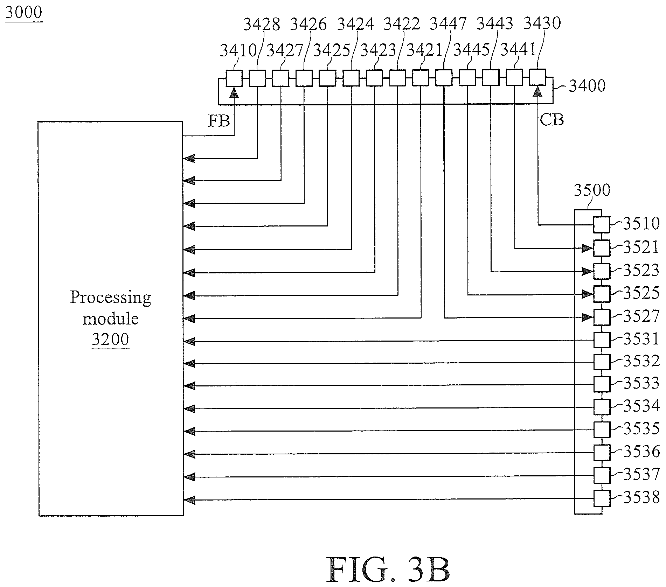

In one embodiment of the present disclosure, please refer to Fig. 3A and Fig. 3B, wherein Fig. 3A is a side-view structure diagram of a processing function expansion card according to another embodiment of the present disclosure, and Fig. 3B is a block diagram corresponding to the processing function expansion card of Fig. 3A. As shown in Fig. 3A and Fig. 3B, in this embodiment, the processing function expansion card 3000 has a substrate 3100, a processing module 3200, a first connecting slot 3400 and a second connecting slot 3500. Here both the processing module 3200 and the first connecting slot 3400 are on a first surface 3101 of the substrate 3100. The second connecting slot 3500 is on a second surface 3102 of the substrate 3100.

As shown in Fig. 3B, the first connecting slot 3400 has a first signal cable 3410, a plurality of first output power cables 3421-3428, a signal bridge connector 3430 and a plurality of first power cables 3441-3447. The second connecting slot 3500 has a second signal cable 3510, a plurality of second power cables 3521-3527 and a plurality of second output power cables 3531-3538.

A plurality of first power cables 3441-3447 and a plurality of second power cables 3521-3527 are electrically connected with each other. The first signal cable 3410 is electrically connected to the signal line of the processing module 3200. The first output power cables 3421-3428 are electrically connected to the first power connecting lines of the processing module 3200. The second power cable 3510 is electrically connected to the signal bridge connector 3430. The second output power cables 3531-3538 are electrically connected to the second power connecting lines of the processing module 3200.

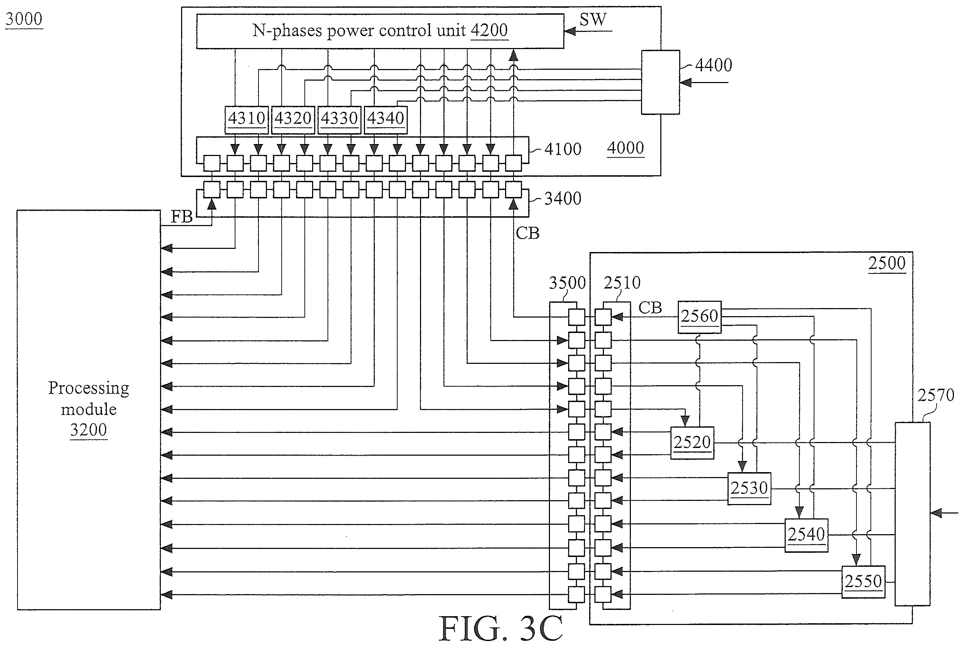

Therefore, when the first connecting slot 3400 and the second connecting slot 3500 are connected to two power expansion boards respectively, please refer to Fig. 3C which is a block diagram of a processing function expansion card connected to the corresponding power expansion board according to one embodiment of the present disclosure. According to one embodiment of the present disclosure shown in Fig. 3C, one power expansion board 4000 has a connector 4100, a multi-phase power control unit 4200 and a plurality of split-phase units 4310, 4320, 4330 and 4340 as well as a power connecting port 4400. The other power expansion board actually is the aforementioned power expansion board 2500 whose structure will not repeated here for clarity. In this embodiment, the number of the split-phase units of the power expansion board 4000 is 4. However, it is not limited to be 4 split-phase units. The connector 4100 is used for connecting to the aforementioned first connecting slot 3400 in a pluggable manner. The operation of the power expansion board 4000 may be equivalent to that of the aforementioned embedded power module 2300. In other words, with the power expansion board 4000, the embedded power module 2300 in conjunction with the power connecting port 2600 in Fig. 2B may become a modular pluggable power expansion board.

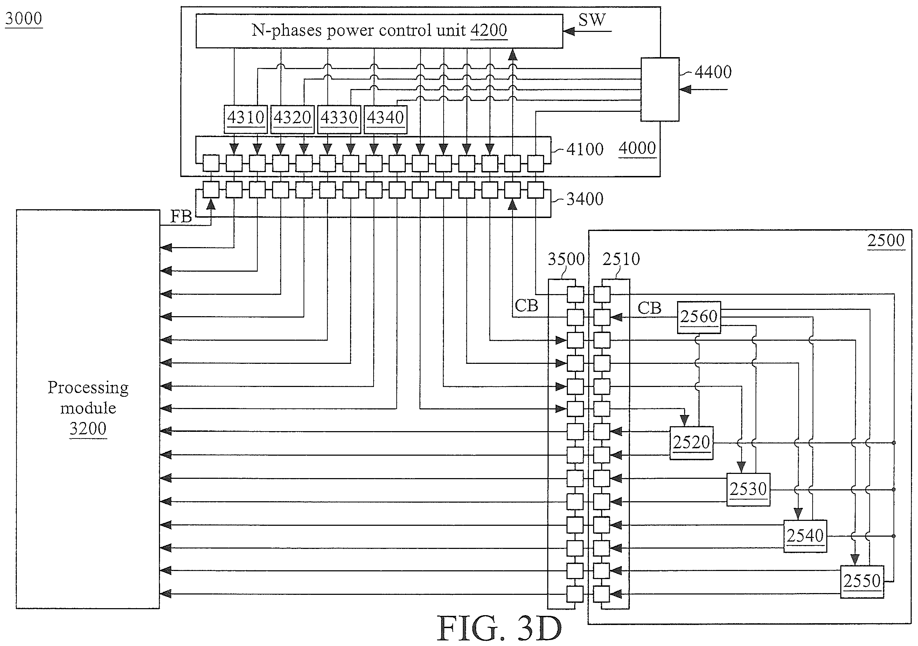

In another embodiment, please refer to Fig. 3D which is a block diagram of a processing function expansion card connected to the corresponding to power expansion board according to another embodiment of the present disclosure. Similar to Fig. 2D, in this embodiment shown in Fig. 3D, the power connecting port of the power expansion board 2500 could be one or more pins of the connector 2510. In this embodiment, the power expansion board 2500 acquires power from the power expansion board 4000 through the power connecting port in the connector 2510.

Based on the descriptions above, according to the processing function expansion card and the power expansion board thereof disclosed in the present disclosure, a modular expanding power modules and a processing function expansion card having a capability of expanding power module are provided so that users are able to provide power having different phases to the processing module according to actual demands.

## Claims

1. A processing function expansion card (1000, 2000, 3000), **characterized by**, comprising:
a substrate (1100, 2100, 3100);
a processing module (1200, 2200, 3200) located on a first surface (1101, 2101, 3101) of the substrate (1100, 2100, 3100) and having a set of first power connecting lines (1210, 2210), a set of second power connecting lines (2231∼2238) and a signal line (1220, 2220);
a first connecting slot (1400, 2400, 3400) connected to the substrate (1100, 2100, 3100) and electrically connected to the set of first power connecting lines (1210, 2210) and the signal line (1220, 2220) and used for connecting to a power expansion board (2500, 4000) in a pluggable manner;
an embedded power module (2300) electrically connected to the set of second power connecting lines (2231∼2238) and the signal line (1220, 2220); and
a power connecting port (2570, 2600, 4400) electrically connected to the embedded power module (2300) and used for connecting to a power supplying device in a pluggable manner to acquire power for supplying the embedded power module (2300);
wherein the first connecting slot (1400, 2400, 3400) is electrically connected to the embedded power module (2300) and electrically connected to the signal line (1220, 2220) through the embedded power module (2300).

2. The processing function expansion card (2000) according to claim 1, wherein the embedded power module (2300) comprises:
an N-phases power control unit (2310) configured to provide M first power commands and (N-M) second power commands, wherein N is an integer greater than one, and M is a positive integer less than or equal to N; and
(N-M) split-phase units (2321∼2327, 2520, 2530, 2540, 2550) electrically connected to the N-phases power control unit (2310), the set of second power connecting lines (2231∼2238) and the power connecting port (2570, 2600) and configured to supply at least (N-M) second output power (Po1∼Po8) to the processing module (2200) according to the (N-M) second power commands.

3. The processing function expansion card (2000) according to claim 2, wherein the N-phases power control unit (2310) is electrically connected to the signal line (2220) and configured to generate the (N-M) second power commands according to a feedback signal (FB) sent from the signal line (2220).

4. The processing function expansion card (2000) according to claim 2, wherein the first connecting slot (2400) comprises:
M first power cables (2421∼2427) electrically connected to the N-phases power control unit (2310); and
at least M output power cables (2431∼2438) electrically connected to the set of first power connecting lines (2210);
wherein the N-phases power control unit (2310) further provides the M first power commands to the M first power cables (2421∼2427) according to a switching signal (SW).

5. The processing function expansion card (2000) according to claim 4, wherein the first connecting slot (2400) further comprises a current information cable (2410), the N-phases power control unit (2310) is electrically connected to the current information cable (2410) and generates the M first power commands and the (N-M) second power commands according to a current balancing information (CB) from the current information cable (2410).

6. The processing function expansion card (3000) according to claim 1, further comprising a second connecting slot (3500), wherein the first connecting slot (3400) comprises:
a plurality of first power cables (3441∼3447) electrically connected to the second connecting slot (3500);
a first signal cable (3410) electrically connected to the signal line;
a plurality of first output power cables (3421-3428) electrically connected to the set of first power connecting lines; and
a signal bridge connector (3430);
wherein the second connecting slot (3500) comprises:
a plurality of second power cables (3521-3527) electrically connected to the first power cables (3441∼3447);
a second signal cable (3510) electrically connected to the signal bridge connector (3430); and
a plurality of second output power cables (3531∼3538) electrically connected to the processing module (3200).

7. A power expansion board (2500),**characterized by**, comprising:
a connector (2510) used for connecting to a connecting slot (2400) in a pluggable manner;
a power connecting port (2570) used for connecting to a power supplying device in a pluggable manner to acquire power; and
a plurality of split-phase units (2520, 2530, 2540, 2550), wherein each split-phase unit (2520, 2530, 2540, 2550) supplies at least one output power (Po1'∼Po8') according to a power command and phases of the output power (Po1'∼Po8') are different from each other and each split-phase unit (2520, 2530, 2540, 2550) comprises:
a signal input terminal (2521) electrically connected to the connector (2510) and configured to receive the power command;
a power input terminal electrically connected to the power connecting port (2570) and configured to acquire power; and
at least one output terminal (2523, 2525) electrically connected to the connector (2510) and configured to output the output power (Po1'∼Po8');
wherein when the connector (2510) is connected to the connecting slot (2400), a multi-phase power control unit (2310) electrically connected to the connecting slot (2400) further generates the power commands according to a feedback signal (FB) from the connecting slot (2400).

8. The power expansion board (2500) according to claim 7, further comprising a control unit (2560) electrically connected to the split-phase units (2520, 2530, 2540, 2550) and the connector (2510) and configured to generate a current balancing information (CB) according to the output power (Po1'∼Po8').

9. The power expansion board (4000) according to claim 7, further comprising a multi-phase power control unit (4200) electrically connected to the connector (4100), wherein the input terminal of each split-phase unit (4310∼4340) is connected to the multi-phase power control unit (4200), and the multi-phase power control unit (4200) is configured to provide a plurality of first power commands to the split-phase units (4310∼4340) so as to generate power having different phases.

10. The power expansion board (4000) according to claim 9, wherein when the connector (4100) is connected to the connecting slot (3400), the multi-phase power control unit (4200) further selectively not output power to the connector (4100) according to a switching signal (SW).

11. The power expansion board (4000) according to claim 9, wherein the multi-phase power control unit (4200) further generates the first power commands or a plurality of second power commands according to a current balancing information (CB) from the connecting slot (3400).
